# EUROPÄISCHE PATENTSCHRIFT

(11) **EP 3 139 079 B1**
(45) Veröffentlichungstag und Bekanntmachung des Hinweises auf die Patenterteilung: **01.05.2019**
(21) Anmeldenummer: 16182575.7
(22) Anmeldetag: 03.08.2016
(51) Int. Cl.: F16L 41/08, F16L 55/18, F16L 55/16

(54) **BAUSATZ ZUR SANIERUNG EINES ROHRLEITUNGSANSCHLUSSES EINES DICKWANDIGEN ROHRS**
CONSTRUCTION KIT FOR RETROFITTING A PIPE CONDUIT CONNECTION OF A THICK-WALLED PIPE
JEU DE PIECES DETACHEES POUR L'ASSAINISSEMENT D'UN RACCORD DE TUYAUTERIE D'UN TUYAU A PAROI EPAISSE

(30) Priorität: 03.09.2015 DE 202015104701 U; 03.12.2015 DE 202015106589 U
(43) Veröffentlichungstag der Anmeldung: 08.03.2017
(73) Patentinhaber: Funke Kunststoffe GmbH, 59071 Hamm-Uentrop (DE)
(72) Erfinder: Funke, Norbert, 48324 Sendenhorst (DE); Funke, Hans-Günter, 48324 Sendenhorst (DE)
(74) Vertreter: Habbel, Ludwig

(56) Entgegenhaltungen:
- EP-A1- 2 281 137
- DE-A1- 3 414 180
- DE-A1-102008 000 049
- DE-U1-202014 102 750
- US-A- 6 015 169

## Beschreibung

Die Erfindung betrifft einen Bausatz nach dem Oberbegriff des Anspruchs 1.

Aus der DE 10 2008 000 049 A1 ist ein gattungsgemäßer Bausatz bekannt, der sich in der Praxis hervorragend bewährt hat.

Aus der DE 20 2014 102 750 U1 ist ein Bausatz bekannt, der nicht längenveränderlich zwei axial aneinander anschließbare Abschnitte aufweist, sondern bei dem die innere Abdichtung und der äußere Abdichtkragen mittels eines Zugelements gegeneinander und insbesondere gegen die dazwischen befindliche Rohrleitung gespannt werden können.

Aus der DE 34 14 180 A1 ist eine Dichtungsanordnung für aneinanderstoßende, zumindest etwa rohrförmige Bauteile, insbesondere für Betonformteile bekannt, die eine Dichtung mit einem Hohlraum aufweist, in welchem ein Druckverteilungsmedium vorgesehen ist. Mittels eines Füllanschlusses kann das Druckverteilungsmedium mit Druck in den Hohlraum eingespeist werden.

Aus der WO 2009 / 132 792 A1 ist ein Elastomereinsatz für einen Nebenrohranschluss bekannt, der in die Bohrung einer durchbohrten Betonwand einer Hauptrohrleitung eingesetzt wird. Der Elastomereinsatz enthält außen umlaufende Zonen mit quellfähigem Material, welches mit Wasser reagiert und somit eine automatische Abdichtung von Undichtigkeiten an der durchbohrten Betonwand zu bewirken.

Aus der US 6 015 169 A ist ein Anschlussstück zur Schaffung einer Verbindung mit einem Betonrohr bekannt. Ein Anschlussrohrkörper wird in eine Bohrung eingesetzt, welche die Wand des Betonrohrs durchsetzt. Zur Abdichtung gegenüber dem Betonrohr sind außen am Anschlussrohrkörper Dichtungselemente angeordnet, unter anderem auch ein flexibler Füllstoff, der einen Spalt dicht schließend überbrückt.

In der Praxis besteht häufig das Problem, dass Rohrleitungen mit atypischen Wandstärken vorgefunden werden und dass an derartige Rohrleitungen Abzweigleitungen angeschlossen werden sollen, oder dass ein vorhandener Rohrleitungsanschluss schadhaft ist, also der Übergangsbereich zwischen der Rohrleitung und der Abzweigleitung saniert werden muss.

Der Erfindung liegt die Aufgabe zugrunde, einen gattungsgemäßen Bausatz dahingehend zu verbessern, dass bei Rohrleitungen mit einer ungewöhnlich großen Wandstärke der Sanierungsstutzen problemlos montiert werden kann.

Diese Aufgabe wird durch einen Bausatz mit den Merkmalen des Anspruchs 1 gelöst. Vorteilhafte Ausgestaltungen sind in den Unteransprüchen beschrieben.

Die Erfindung schlägt mit anderen Worten vor, dass die Abdichtung anstelle der außen umlaufenden Dichtlippe oder zusätzlich dazu in Form einer so genannten aktivierbaren Dichtung ausgestaltet ist. Unter dem Begriff der aktivierbaren Dichtung wird eine Dichtung verstanden, deren Außendurchmesser vergrößert werden kann. Hierzu weist die Dichtung üblicherweise einen durchgehenden Hohlraum im Inneren auf, so dass der äußere Umfang der Dichtung flüssigkeitsdicht ausgestaltet ist, in das Innere jedoch ein Expansionsmedium eingeleitet werden kann, beispielsweise ein Gas oder eine Flüssigkeit, um die Dichtung auf diese Weise regelrecht auszupumpen. Oder es kann ein expandierbares Material, beispielsweise ein reaktiver Zweikomponentenschaum, in den inneren Hohlraum der Dichtung eingeführt werden, so dass die Expansion dieses Schaums dann die Vergrößerung des Außendurchmessers der Abdichtung und damit die besonders flüssigkeitsdichte Anlage der Abdichtung am Material der Rohrleitung bewirkt. Um den zur Expansion der Abdichtung vorgesehenen Stoff in den inneren Hohlraum der Abdichtung einbringen zu können, ist vorteilhaft ein Ventil an der Abdichtung vorgesehen, beispielsweise ähnlich den Profilen von Fahrzeugreifen. Dieses Ventil kann sich beispielsweise in den Ringspalt zwischen dem Sanierungsstutzen und der Wand der Rohrleitung erstrecken, so dass dieses Ventil über einen Versorgungsschlauch zugänglich ist, nachdem der innere Abschnitt des Sanierungsstutzens in die Anschlussöffnung der Rohrleitung eingebracht worden ist. Das Ventil selbst wird später vom flüssigen Dichtungsmittel umschlossen, welches in diesen Ringspalt eingeführt wird, so dass das Ventil einerseits nicht einen hinderlichen Vorsprung bildet, der irgendwo im Wege ist, und so dass das flüssige Dichtungsmittel die zuverlässige Dichtheit dieses Ventils sicherstellt, indem sie das Ventil nach außen hin abdichtet.

Da die am Sanierungsstutzen vorgesehene Abdichtung als aktivierbare Dichtung ausgestaltet ist, kann ein dichtungswirksamer Anpressdruck der Abdichtung sichergestellt werden. Hierzu weist die Abdichtung einen Hohlraum auf sowie einen Füllanschluss, über welchen ein Füllmedium in den Hohlraum eingebracht werden und die Abdichtung dadurch aufgedehnt werden kann, so dass sie ihren Außendurchmesser zu vergrößern bestrebt ist. Zudem ist vorschlagsgemäß ein Entlüftungsventil vorgesehen, welches an den Hohlraum der Abdichtung anschließt. Falls kein Gas als Füllmedium verwendet wird, kann die im Hohlraum befindliche Luft von dem Füllmedium vollständig verdrängt werden und das Füllmedium sich gleichmäßig in dem Hohlraum der Abdichtung verteilen, so dass eine gleichmäßige Wirkung sichergestellt werden kann, mit welcher das Füllmedium auf die Abdichtung einwirkt.

Dadurch, dass der Rohrleitungsstutzen zweiteilig ausgegestaltet ist, kann dessen Längenanpassung problemlos an die sehr individuell vorliegenden Wandstärken der vorgefundenen Rohrleitung angepasst werden. Insbesondere wenn Rohrleitungen beispielsweise aus Stampfbeton hergestellt sind oder gemauert sind, können die Wandstärken unübliche und vergleichbar große Werte aufweisen, so dass die Verwendung serienmäßig vorkonfektionierter Sanierungsstutzen in solchen Fällen nicht möglich oder zumindest nicht wirtschaftlich sinnvoll ist.

Durch die Ausgestaltung des Sanierungsstutzens mit einem inneren und einem äußeren Abschnitt die axial aneinander anschließen, wird eine Längenveränderlichkeit des Sanierungsstutzens bewirkt, welche die individuelle Anpassung des Sanierungsstutzens an die jeweilige Wandstärke der Rohrleitung ermöglicht. Beispielsweise können die beiden Abschnitte des Sanierungsstutzens teleskopartig ineinandergreifen und durch unterschiedlich weite Überlappung eine dementsprechend unterschiedliche Länge des Sanierungsstutzens bewirken oder die beiden Abschnitte können stumpf aneinander stoßen, also den gleichen Durchmesser aufweisen, so dass in diesem Fall ein oder beide Abschnitte gekürzt werden können, um auf diese Weise die gewünschte Gesamtlänge des Sanierungsstutzens zu erzielen. Abgesehen davon, dass die beiden Abschnitte des Sanierungsstutzens aneinander anschließen, um so insgesamt einen durchgehenden, längeren Sanierungsstutzen zu bilden, weist jeder der beiden Abschnitte von der gemeinsamen Anschlussstelle bzw. Trennstelle entfernt ein Dichtungselement auf, um flüssigkeitsdicht an die Wand der Rohrleitung anzuschließen: Der Abschnitt, der sich am weitesten in die Wand der Rohrleitung hinein erstreckt, wird als innerer Abschnitt bezeichnet. Er weist die Abdichtung auf, um vom Sanierungsstutzen eine flüssigkeitsdichte Abdichtung zum Inneren der Rohrleitung hin zu bewirken. Der andere, so genannte äußere Abschnitt des Sanierungsstutzens weist den Abdichtungskragen auf, welcher der Wand der Rohrleitung außen anliegt, so dass mit Hilfe der inneren Abdichtung und des äußeren Abdichtungskragens der den Sanierungsstutzen umgebende Ringspalt, der sich in der Anschlussöffnung der Rohrleitung ergibt, beidseitig abgedichtet ist und so dass dementsprechend das flüssige Dichtmittelt in diesen Ringspalt eingebracht werden kann, ohne unkontrolliert aus dem erwähnten Ringspalt herauszulaufen. Die Menge dieses Dichtmittels kann vergleichsweise groß bemessen sein, da es bei den Rohrleitungen die eine besonders große Wandstärke aufweisen, häufig vorkommt, dass in der Wand Fehlstellen vorkommen, die entweder bei der Herstellung der Rohrleitung bereits nicht vollständig ausgefüllt waren, oder die im späteren Betrieb der Rohrleitung durch Ausbrüche entstanden sind. Diese Fehlstellen werden ebenfalls mit dem flüssigen Dichtungsmittel ausgefüllt, wenn dieses in den Ringspalt um den Sanierungsstutzen herum eingefüllt wird.

Vorteilhaft kann der innere Abschnitt keine geradlinige Mündung aufweisen, die also in einer Ebene quer zur Längsachse des Sanierungsstutzens verläuft, sich also lediglich zweidimensional in Form eines Kreises erstreckt, sondern an die Krümmung der Rohrleitungswand angepasst, kann die Mündung des inneren Abschnitts vorteilhaft dreidimensional gewölbt verlaufen, so dass kein hinderlicher Überstand durch den Sanierungsstutzen geschaffen wird, der in das Innere der Rohrleitung hineinragen würde.

Vorteilhaft kann die Abdichtung des Sanierungsstutzens wenigstens eine umlaufende Dichtlippe aufweisen, mit welcher die Abdichtung der Wand der Rohrleitung anliegt, nämlich innen an der Anschlussöffnung. Diese Dichtlippe ist in axialer Richtung des Sanierungsstutzens im Querschnitt schräg angeordnet, ähnlich wie ein Widerhaken, so dass der Sanierungsstutzen mitsamt der Abdichtung in die Anschlussöffnung der Rohrleitung eingeführt werden kann, jedoch bei dem Versuch, den Sanierungsstutzen aus der Anschlussöffnung der Rohrleitung herauszuziehen, einen deutlich größeren Widerstand bewirkt.

Vorteilhaft kann auch die Abdichtung wie oben erwähnt dreidimensional gewölbt verlaufen und nicht einfach nur als ein Ring in einer Ebene ausgestaltet sein, so dass einerseits ein hinderlicher Überstand in das Innere der Rohrleitung vermieden werden kann und andererseits der Ringspalt zwischen Sanierungsstutzen und Rohrleitungswand sich möglichst über die gesamte Länge der Anschlussöffnung erstrecken kann. Auf diese Weise kann ein Eindringen von Medium in die Anschlussöffnung und von dort in die Wand der Rohrleitung möglichst zuverlässig ausgeschlossen werden.

Vorteilhaft kann wenigstens einer der beiden Abschnitte des Sanierungsstutzens derart ausgestaltet sein, dass er baustellenseitig gekürzt werden kann. Im Vergleich dazu, zunächst die Wandstücke der vorgefundenen Rohrleitung auszumessen und dann herstellerseitig den Sanierungsstutzen mit der passenden Länge herstellen zu lassen, ergibt sich so ein erheblicher Zeitgewinn bei der Durchführung der Sanierungsmaßnahmen. Um wenigstens einen der beiden Abschnitte an der Baustelle kürzen zu können, können mehrere Maßnahmen, einzeln oder in Kombination, vorgesehen sein:
- Beispielsweise kann das verwendete Material des Sanierungsstutzens die Arbeit an der Baustelle erleichtern. Der Sanierungsstutzen kann beispielsweise vorteilhaft aus Kunststoff bestehen, so dass er im Vergleich beispielsweise zu metallischen oder mineralischen Werkstoffen leichter bearbeitet, beispielsweise geschnitten werden kann.
- Es können Markierungen vorgesehen sein, beispielsweise umlaufende Ringe, die den Benutzer darin unterstützen können, den betreffenden Abschnitt des Sanierungsstutzens möglichst geradlinig abzuschneiden, nämlich quer zur Längsachse des betreffenden Abschnitts.
- Diese Markierungen können beispielsweise farbig, durch Bedruckung auf der Außenseite des betreffenden Abschnitts geschaffen sein, sie können jedoch auch im Material des betreffenden Abschnitts selbst verwirklicht sein, beispielsweise in Form von nach außen ragenden Rippen oder nach innen, die Wandstärke verringernden Rillen.
   In beiden Fällen bieten die so ausgestalteten ringförmigen Markierungen einem angesetzten Werkzeug eine gewisse Führung und erlauben zudem die optische Kontrolle, so dass der Benutzer das Werkzeug dementsprechend gut für den oben erwähnten geraden Schnitt führen kann.
- Es können Markierungen in Art einer Skala mit Zahlenwerten vorgesehen sein, beispielsweise in Form eines entsprechenden Klebestreifens, der beispielsweise entlang der oberen Scheitellinie auf dem betreffenden Abschnitt aufgeklebt ist. Diese Skala kann so ausgestaltet und angeordnet sein, dass sie beim Kürzen des Abschnitts die verbleibende restliche Länge des Abschnitts anzeigt. Sie kann jedoch auch so ausgestaltet und angeordnet sein, dass sie beim Kürzen des Abschnitts die Länge anzeigt, die der Sanierungsstutzen insgesamt aufweisen wird, wenn der derart gekürzte Abschnitt mit dem anderen Abschnitt den Sanierungsstutzen bildet.
   Insbesondere wenn der markierte Abschnitt in ein anderes Element des Sanierungsstutzens eingeschoben werden kann, kann die Markierung nicht nur zum Kürzen genutzt werden, sondern auch als Anzeige, wie weit dieser Abschnitt in das andere Element des Sanierungsstutzens eingeschoben werden muss, um die gewünschte Gesamtlänge des Sanierungsstutzens zu bewirken.

Vorteilhaft kann eine Schiebemuffe vorgesehen sein, die die beiden Abschnitte des Sanierungsstutzens überbrückt, wenn diese beiden Abschnitte den gleichen Durchmesser und ggf. die gleiche Wandstärke aufweisen, also stumpf aneinander stoßen. Mittels der Schiebemuffe kann eine mechanisch stabile Verbindung der beiden Abschnitte geschaffen werden. Zudem werden Unregelmäßigkeiten ausgeglichen, wenn beispielsweise der an der Baustelle gekürzte Abschnitt eine Schnittfläche aufweist, die keinen lückenlosen Anschluss an den anderen Abschnitt ermöglicht. Die Verwendung einer Schiebemuffe ist insofern vorteilhaft, als ein serienmäßig vorhandenes Bauelement - beispielsweise ein serienmäßig im Lieferprogramm eines Rohrherstellers geführtes Rohr - verwendet werden kann, um einen der beiden Abschnitte zu schaffen. Dieses serienmäßig vorhandene Bauelement muss lediglich werkseitig gekürzt werden und stellt dann mittels der Schiebemuffe einen Rohrabschnitt dar, an dessen Muffenende ein anderer Rohrabschnitt, nämlich der jeweils andere Abschnitt des Sanierungsstutzens, in an sich bekannter Weise anschließen kann.

Die Schiebemuffe kann mit einem der beiden Abschnitte des Sanierungsstutzens bereits werkseitig, nämlich durch den Hersteller des Bausatzes, verklebt sein, so dass dieser Abschnitt auch als Muffenabschnitt bezeichnet werden kann, über dessen Ende die Schiebemuffe hinausragt und zur Aufnahme des anderen Abschnitts dient. Während der Muffenabschnitt somit werkseitig vorkonfektioniert ist, kann der andere Abschnitt an der Baustelle passend gekürzt werden, um die gewünschte Längenanpassung des Sanierungsstutzens zu bewirken.

Wenn der Muffenabschnitt werkseitig vorkonfektioniert ist, kann gegebenenfalls auf eine Verklebung des anderen, anpassbaren Abschnitts mit der Schiebemuffe und / oder dem Muffenabschnitt verzichtet werden, so dass an der Baustelle die Handhabung von Klebstoff nicht erforderlich ist. Dies ist beispielsweise möglich, wenn das flüssige Dichtungsmittel, welches anschließend um den Sanierungsstutzen herum verwendet wird, die Dichtigkeit des Sanierungsstutzens sicherstellt und gegen die darin geführten Medien beständig ist.

Um den Sanierungsstutzen auf eine bestimmte Länge einzustellen und in dieser Länge zu fixieren, kann vorteilhaft vorgesehen sein, an der oben erwähnten Schiebemuffe eine Madenschraube vorzusehen, die durch Schraubbewegungen in radialer Richtung beweglich ist. Beispielsweise kann in der Schiebemuffe ein Gewinde vorgesehen sein, mit welchem die Madenschraube kämmt. Während die Schiebemuffe mit dem einen Abschnitt des Sanierungsstutzens verklebt ist, kann die Madenschraube mit ihrem radial inneren Ende, wo sie typischerweise eine Spitze aufweist, in den unverklebten Abschnitt des Sanierungsstutzens eindringen und somit die beiden Abschnitte in ihrer Relativstellung zueinander festlegen. Die Madenschraube kann also in den unverklebten Abschnitt eingeschraubt werden, auch wenn in diesem unverklebten Abschnitt kein die Madenschraube aufnehmendes Gewinde vorgesehen ist.

Alternativ zur Längenfixierung mittels einer Madenschraube kann die Länge des Sanierungsstutzens durch Festlegung beiden Abschnitte mittels einer Verklemmung bewirkt werden. Hierzu kann die Schiebemuffe vorteilhaft einen Längsschlitz dort aufweisen, wo sie über den Abschnitt hinausragt, mit welchem sie verklebt ist. Eine Spannschelle verläuft um den Umfang dieses Überstandes der Schiebemuffe, so dass mittels der Spannschelle und aufgrund des Längsschlitzes der Durchmesser dieses Überstandes verringert werden kann und der andere, unverklebte Abschnitt des Sanierungsstutzens festgeklemmt werden kann.

Alternativ dazu, die beiden Abschnitte des Sanierungsstutzens mit gleichen Durchmessern auszugestalten, sie stumpf aneinandergrenzen zu lassen und gegebenenfalls mittels einer Schiebemuffe zu überbrücken, können die Abschnitte mit unterschiedlichen Durchmessern ausgestaltet werden, so dass sie teleskopartig ineinander geführt werden können. In diesem Fall können die beiden Abschnitte unmittelbar miteinander verklebt werden. Durch unterschiedlich große Überdeckungen der beiden Abschnitte kann die Länge des Sanierungsstutzens verändert werden, so dass gegebenenfalls diese Längenanpassung erfolgen kann, ohne einen Abschnitt kürzen zu müssen. Und wenn einer der beiden Abschnitte an der Baustelle gekürzt wird, so ermöglicht die anschließende Überdeckung der beiden Abschnitte, dass die Schnittfläche des gekürzten Abschnitts problemlos eine unregelmäßige Schnittfläche aufweisen darf, ohne die Qualität der Verbindung der beiden Abschnitte zu beeinträchtigen.

Alternativ zu einer teleskopierbaren Ausgestaltung der beiden Abschnitte kann vorgesehen sein, die beiden Abschnitte ebenfalls mit unterschiedlichen Durchmessern auszugestalten, diese jedoch nicht frei verschiebbar auszugestalten, sondern vielmehr mit zwei zusammenwirkenden Gewinden, so dass der eine Abschnitt mit dem anderen verschraubt werden kann und dabei eine Längenänderung des gesamten Sanierungsstutzens bewirkt. Auch hier lässt die Überdeckung der beiden Abschnitte Unregelmäßigkeiten in der Schnittfläche eines eventuell gekürzten Abschnitts zu, ohne die Qualität der Verbindung der beiden Abschnitte zu beeinträchtigen.

Wenn die beiden Abschnitte miteinander verklebt werden, entweder direkt miteinander wie bei teleskopierbaren oder verschraubbaren Abschnitten oder mittelbar, z. B. mittels der erwähnten Schiebemuffe, so kann eine sowohl mechanisch stabile als auch flüssigkeitsdichte Verbindung der beiden Abschnitte geschaffen und die Länge des Sanierungsstutzens unveränderlich festgelegt werden. Dementsprechend kann der Bausatz vorteilhaft Klebstoff enthalten, der das Verkleben der beiden Abschnitte ermöglicht, indem er an die Werkstoffe angepasst ist, aus denen die beiden Abschnitte und die ggf. vorgesehene Schiebemuffe bestehen, und indem er beständig gegenüber dem in dem Sanierungsstutzen geführten Medium ist.

Vorteilhaft kann die Einfüllöffnung mit einem Einfüllstutzen versehen sein, der sich radial nach außen erstreckt, bezogen auf die Längsachse des Sanierungsstutzens. In der Praxis wird bei der Sanierung der Rohrleitung der Einfüllstutzen am oberen Scheitelpunkt der Anschlussöffnung der Rohrleitung angeordnet. Das flüssige Dichtungsmittel, welches anschließend durch den Einfüllstutzen eingefüllt wird, verläuft im Ringspalt zwischen Sanierungsstutzen und der Wand der Rohrleitung nach unten, wobei der Pegel dieses flüssigen Dichtungsmittels langsam ansteigt. Wenn sich der Einfüllstutzen geodätisch weiter nach oben erstreckt als bis zum obersten Punkt der Anschlussöffnung, kann problemlos sichergestellt werden, dass der Ringspalt innerhalb der Anschlussöffnung vollständig mit dem Dichtungsmittel ausgefüllt wird, indem einfach so viel Dichtungsmittel in den Einfüllstutzen eingefüllt wird, bis das flüssige Dichtungsmittel nahe der oberen Mündung dieses Einfüllstutzens steht.

Vorteilhaft kann vorgesehen sein, dass die Abdichtung, die am inneren Abschnitt des Sanierungsstutzens vorgesehen ist, nicht im inneren Hohlraum der Rohrleitung angeordnet ist, sondern ausschließlich in der Anschlussöffnung verläuft, sich also ausschließlich innerhalb der Wand der Rohrleitung befindet. Insbesondere bei den Rohrleitungen mit besonders großer Wandstärke, die beispielsweise aus Stampfbeton bestehen oder deren Wände gemauert sind, treten häufig an der inneren Oberfläche derartiger Rohrleitungen erhebliche Unregelmäßigkeiten auf, die entweder herstellungsbedingt sind oder später durch Abplatzungen oder ähnliche Vorgänge entstanden sind. Dadurch, dass die Abdichtung der inneren Oberfläche der Rohrleitung nicht anliegt, wird eine Fehlerquelle für die Dichtungswirksamkeit dieser Abdichtung ausgeschlossen. Vielmehr liegt die Abdichtung ausschließlich der Anschlussöffnung an, die während des Sanierungsverfahrens in die Wand der Rohrleitung eingebracht worden ist, indem beispielsweise eine zuvor vorhandene Anschlussöffnung durch eine etwas größere Bohrung aufgeweitet worden ist und so dass auf diese Weise eine vorbestimmte Geometrie der Anschlussöffnung geschaffen wird, an welche die Abdichtung mit einer zuverlässigen Dichtungswirkung angelegt werden kann.

Vorteilhaft kann zu Gunsten einer stabilen Verankerung des Sanierungsstutzens in dem flüssigen Dichtungsmittel einer oder beide Abschnitte außen rauh ausgestaltet sein, z. B. indem sie zumindest bereichsweise außen besandet sind.

Als Medium, welches in den Hohlraum der Abdichtung eingeleitet wird, kann ein Gas bzw. Gasgemisch - wie z.B. Umgebungsluft - verwendet werden, oder eine Flüssigkeit - wie z.B. Wasser - oder andere geeignete Stoffe bzw. Stoffgemische. Beispielsweise kann ein expandierbarer Schaum verwendet werden, der aushärtet bzw. abbindet und dann über lange Zeit das gewünschte, vergrößerte Querschnittsvolumen der Abdichtung sicherstellt.

Der vorschlagsgemäße Bausatz kann in einem solchen Fall vorteilhaft eine Schaumpatrone enthalten die an den Füllanschluss der Abdichtung angeschlossen werden kann. Die Schaumpatrone kann entweder einen Zwei-Komponenten-Schaum enthalten, dessen Reaktion in an sich bekannter Weise zu einer gewünschten Zeit in Gang gesetzt werden kann, so dass der Schaum sich dann auszudehnen beginnt und in den Hohlraum der Abdichtung eindringt. Oder die Schaumpatrone kann einen Ein-Komponenten-Schaum enthalten, der unter Druck steht, und der dann, wenn die Schaumpatrone an den Füllanschluss angeschlossen wird, durch den Füllanschluss in den Hohlraum der Abdichtung einströmt.

Das Entlüftungsventil der Abdichtung kann als Rückschlagventil ausgestaltet sein, so dass es nicht manuell betätigt zu werden braucht und beispielsweise auch an schlecht erreichbaren Stellen angeordnet sein kann.

Alternativ kann das Entlüftungsventil als manuell absperrbares Ventil ausgestaltet sein, so dass es preisgünstig herstellbar ist und aufgrund der manuellen Betätigung zuverlässig seine jeweils gewünschte Offen- oder Schließstellung einnimmt.

Ähnlich wie das erwähnte Rückschlagventil kann ein feinporiges Material eine automatische Ventilfunktion bewirken: Falls das Material für Luft durchlässig ist, so dass die Luft aus dem Hohlraum entweichen und durch das eindringende Füllmedium verdrängt werden kann, und falls das Material aufgrund seiner Porengröße für das Füllmedium undurchlässig ist, so kann ein solches Material auch ohne bewegliche Teile als Entlüftungsventil dienen. Als undurchlässig ist in diesem Zusammenhang auch eine Porosität des Materials zu verstehen, die einen gewissen Austritt des Füllmediums zulässt, falls dennoch die gewünschte Ventilfunktion sichergestellt werden kann.

Ähnlich wie durch ein feinporiges Material kann das Entlüftungsventil - ebenfalls ohne bewegliche Teile - durch eine Entlüftungsbohrung geschaffen werden, sofern diese einen ausreichend kleinen Durchmesser aufweist, um die Luft aus dem Hohlraum austreten zu lassen, das Füllmedium jedoch zurückzuhalten.

Wenn beispielsweise ein Zwei-Komponenten-PU-Schaummaterial als Füllmedium verwendet wird, kann durchaus vorgesehen sein, dass dieses zunächst die Luft aus dem Hohlraum der Abdichtung verdrängt und dann selbst aus dem Entlüftungsventil austritt. Wenn die Porengröße bzw. das freie Lumen des Entlüftungsventils gering genug bemessen ist, bewirkt die klebrige Konsistenz des Füllmediums, dass dieses im Freien, nach dem Austritt aus dem Entlüftungsventil, so schnell und in einem solchen Ausmaß verfestigt, dass es einen wirksamen Verschluss des Entlüftungsventils bildet. Im Inneren des Hohlraums kann dann die Schaumbildung und die Expansion des Füllmediums weiter fortschreiten, so dass die Abdichtung in dem gewünschten Maße aufgedehnt und somit "aktiviert" wird.

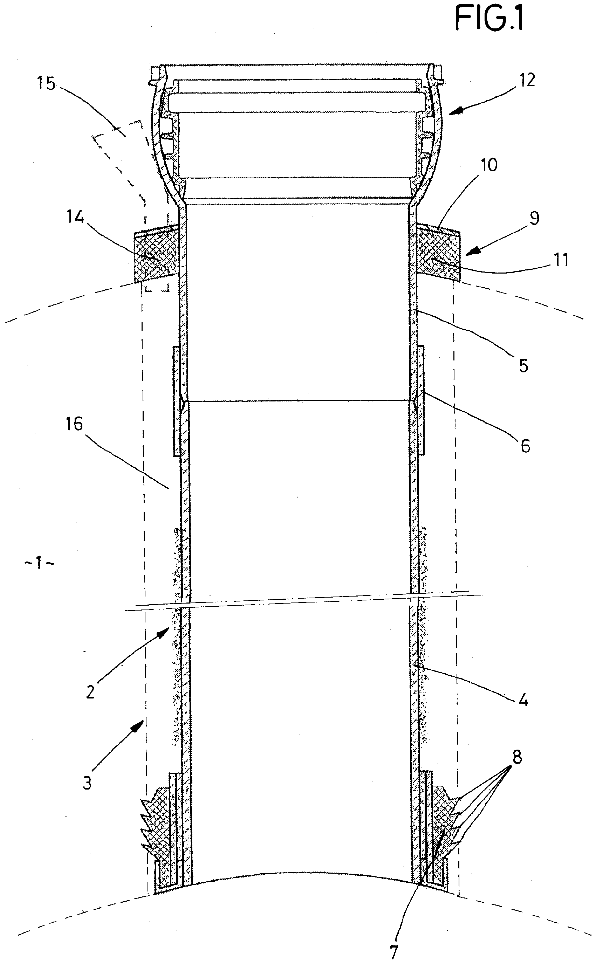

Ausführungsbeispiele der Erfindung werden anhand der rein schematischen Darstellungen nachfolgend näher erläutert. Dabei zeigt
- Fig. 1: einen Längsschnitt durch ein erstes, nicht von den Ansprüchen abgedecktes Ausführungsbeispiel eines Sanierungsstutzens, und
- Fig. 2: einen Längsschnitt durch ein zweites Ausführungsbeispiel eines Sanierungsstutzens.

In beiden Zeichnungen ist mit 1 eine lediglich gestrichelt und ausschnittsweise angedeutete Rohrleitung bezeichnet, in die ein Sanierungsstutzen 2 eingesetzt ist. Hierzu ist in der Wand der Rohrleitung 1 eine Anschlussöffnung 3 vorhanden, die sich in radialer Richtung durch die Wand der Rohrleitung 1 erstreckt. Entweder kann eine vorhandene Anschlussöffnung 3 unverändert genutzt werden, oder es kann eine Bohrung in die zuvor geschlossene Wand der Rohrleitung 1 eingebracht worden sein, oder es kann eine vorhandene Anschlussöffnung 3 mittels einer Bohrung zu der dargestellten Anschlussöffnung 3 erweitert worden sein, um eine definierte Mantelfläche dieser Anschlussöffnung 3 zu schaffen.

Der Sanierungsstutzen 2 weist einen inneren Abschnitt 4 auf sowie einen äußeren Abschnitt 5, wobei diese beiden Abschnitte 4 und 5 den gleichen Durchmesser und die gleiche Wandstärke aufweisen, so dass sie in axialer Richtung stumpf aneinander stoßen. Im Bereich dieser Trennstelle werden sie von einer Schiebemuffe 6 überbrückt. Die Schiebemuffe 6 ist mit beiden Abschnitten 4 und 5 verklebt und auch die aneinander grenzenden Stirnflächen der beiden Abschnitte 4 und 5 sind miteinander verklebt. Zu Gunsten einer stabilen Verankerung in dem später einzufüllenden flüssigen Dichtungsmittel ist der längere der beide Abschnitte, nämlich der innere Abschnitt 4, über mehr als die Hälfte seiner Länge außen besandet.

Der innere Abschnitt 4 weist eine Abdichtung 7 auf, die zur Innenseite der Rohrleitung 1 hin abdichtungswirksam ist. Die Abdichtung 7 ist als Dichtungsring aus einem Elastomerwerkstoff ausgestaltet. Sie weist radial außen mehrere Dichtlippen 8 auf, deren Querschnitte jeweils widerhakenartig schräg ausgerichtet sind, so dass der Sanierungsstutzen 2 mit vergleichsweise geringerem Widerstand in die Anschlussöffnung 3 eingeschoben werden kann, jedoch das Herausziehen des Sanierungsstutzens 2 aus der Anschlussöffnung 3 einen erheblich größeren Kraftaufwand erfordern würde. Wenn der Sanierungsstutzen 2 in der Auszugsrichtung bewegt wird, verspannen sich folglich die Dichtlippen 8 und liegen besonders fest und somit besonders dicht der Anschlussöffnung 3 an.

Der äußere Abschnitt 5 weist einen Abdichtungskragen 9 auf, der einen vergleichsweise härteren Stützring 10 und einen vergleichsweise weicheren Dichtungsring 11 umfasst.

Der äußere Abschnitt 5 ist außerhalb der Rohrleitung 1 mit einem so genannten Kugeladapter 12 versehen, der auch als Variomuffe bezeichnet wird und an sich bekannt ist, und der den Anschluss einer Abzweigleitung in unterschiedlichen Winkeln ermöglicht. Der äußere Abschnitt 5 ist werkseitig mit der Schiebemuffe 6 bestückt und verklebt worden, so dass an der Baustelle lediglich der innere Abschnitt 4 auf die passende Länge zugeschnitten und in die Schiebemuffe 6 eingeklebt zu werden braucht.

Der Abdichtungskragen 9 weist eine Einfüllöffnung 14 auf, in die ein Einfüllstutzen 15 eingesteckt ist, welcher in der Zeichnung lediglich gestrichelt angedeutet ist, weil es sich um ein temporär verwendetes Bauteil handelt, welches bei Beendigung der Sanierungsarbeiten zumindest wieder entfernt werden kann. Der Einfüllstutzen 15 ist in radialer Richtung, bezogen auf die Längsachse des Sanierungsstutzens 2, nach außen abgewinkelt und erstreckt sich dadurch geodätisch höher als die höchste Stelle eines Ringspalts, der auch als Dichtspalt 16 bezeichnet wird. Dieser Dichtspalt 16 ergibt sich innerhalb der Anschlussöffnung 3 und wird einerseits von dem Sanierungsstutzen 2 und der Wand der Rohrleitung 1 sowie andererseits von der Abdichtung 7 sowie dem Abdichtungskragen 9 begrenzt. Durch den Einfüllstutzen 15 wird ein flüssiges Dichtungsmittel in den Dichtspalt 16 eingefüllt. Nachdem das Dichtungsmittel ausgehärtet ist, kann der nach außen über den Stützring 10 des Abdichtungskragens 9 vorstehende Teil des Einfüllstutzens 15 abgetrennt werden.

Aus der Zeichnung ist weiterhin ersichtlich, dass das Mündungsende des inneren Abschnitts 4, welches an den inneren Hohlraum der Rohrleitung 1 anschließt, nicht in einer einzigen Ebene ringförmig verläuft, sondern vielmehr dreidimensional gebogen verläuft, nämlich der Krümmung der Wand der Rohrleitung 1 angepasst ist. Auch die Abdichtung 7 verläuft dementsprechend dreidimensional gebogen.

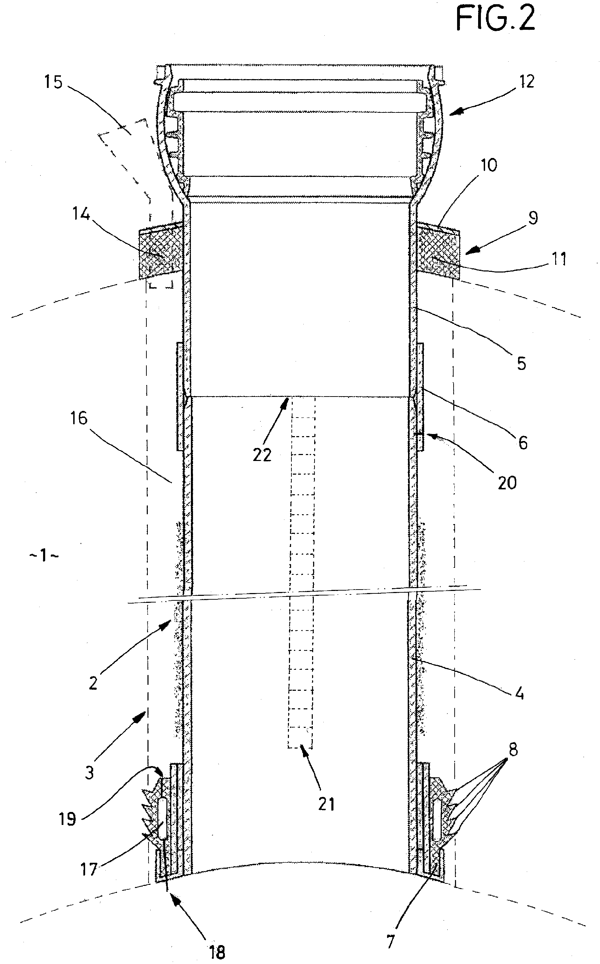

Fig. 2 zeigt ein Ausführungsbeispiel, bei welchem die Abdichtung 7 als aktivierbare Dichtung ausgestaltet ist. Die Abdichtung 7 weist hierzu einen Hohlraum 17 auf, in den mittels eines Füllanschlusses 18 ein Füllmedium eingebracht werden kann. Über ein geöffnetes Entlüftungsventil 19 kann das Füllmedium die im Hohlraum 17 befindliche Luft verdrängen. Sobald das Entlüftungsventil 19 geschlossen ist, kann das Füllmedium im Hohlraum 17 einen Druck aufbauen, der den Außendurchmesser der Abdichtung 7 erweitert. Bei dem dargestellten Ausführungsbeispiel ist das Entlüftungsventil 19 als Bohrung ausgestaltet, welche die Wandung der Abdichtung 7 durchsetzt und einen so geringen Durchmesser aufweist, beispielsweise von etwa 2 mm, dass ein expandierender zweikomponentiger Polyurethanschaum diese Bohrung selbsttätig verschließt und anschließend bei seiner weiteren Expansion den gewünschten Druck im Hohlraum 17 aufbauen kann, um die Abdichtung 7 aufzuweiten und in der Anschlussöffnung 3 abdichtend fest an die Wand der Rohrleitung 1 anzupressen.

Weiterhin ist in Fig. 2 eine Madenschraube 20 dargestellt, die in einem Gewinde läuft, welches in der Schiebemuffe 6 vorgesehen ist. Dabei ist die Schiebemuffe 6 mit dem äußeren Abschnitt 5 des Sanierungsstutzens 1 verklebt, und der innere Abschnitt 4 ist lediglich in den Überstand der Schiebemuffe 6 eingesteckt, welcher über den äußeren Abschnitt 5 hinausragt. Das Ende des inneren Abschnitts 4, welches in die Schiebemuffe 6 eingesteckt wird, ist als Einsteck-Ende 22 bezeichnet. Rein beispielhaft liegen die beiden Abschnitte 4 und 5 einander an. Abweichend von dem dargestellten Ausführungsbeispiel kann jedoch vorgesehen sein, dass der innere Abschnitt 4 nur so weit in den Überstand der Schiebemuffe 6 eingesteckt ist, dass ein Spalt zwischen den Abschnitten 4 und 5 verbleibt. In diesem Fall wird die eingestellte Gesamtlänge des Sanierungsstutzens 1 dadurch beibehalten, dass die Madenschraube 20 sich mit ihrer Spitze radial nach innen bis in den inneren Abschnitt 4 hinein erstreckt und somit den inneren Abschnitt 4 innerhalb der Schiebemuffe 6 festlegt.

Abweichend von dem dargestellten Ausführungsbeispiel kann eine längere Schiebemuffe 6 und ein kürzerer innerer Abschnitt 4 verwendet werden, so dass der über den äußeren Abschnitt 5 hinausragende Überstand der Schiebemuffe 6 dementsprechend länger sein kann und einen großen Verstellbereich ermöglicht, ohne dass der innere Abschnitt 4 gekürzt werden müsste.

In Fig. 2 ist eine Skala 21 gestrichelt angedeutet, die auf der vom Betrachter abgewandten Oberfläche außen am Umfang des inneren Abschnitts 4 angeordnet ist und achsparallel verläuft. Die Skala 21 weist Zentimeter-Angaben auf, die sich bis zum Einsteck-Ende 22 erstrecken. Die Zentimeter-Angaben zeigen jeweils die Gesamtlänge des Sanierungsstutzens 1 an, die sich daraus ergibt, dass der innere Abschnitt 4 so weit in den Überstand der Schiebemuffe 6 eingeschoben wird, bis er dem äußeren Abschnitt 5 anliegt.

## Patentansprüche

1. Bausatz zur Sanierung eines Rohrleitungsanschlusses,
▪ mit einem als Sanierungsstutzen (2) bezeichneten Rohrleitungsstutzen,
der zum Einsetzen in eine Anschlussöffnung (3) einer Rohrleitung (1) vorgesehen ist,
▪ einer zu der Innenseite der Rohrleitung (1) wirksamen, an dem Sanierungsstutzen (2) angeordneten Abdichtung (7),
▪ einem zu der Außenseite der Rohrleitung (1) wirksamen, an dem Sanierungsstutzen (2) angeordneten Abdichtungskragen (9),
der den Sanierungsstutzen (2) umgibt,
erstens der Rohrleitung (1) dicht anliegt,
zweitens dem Sanierungsstutzen (2) dicht anliegt, und der eine von außen zugängliche Einfüllöffnung (14) aufweist,
▪ sowie mit einem flüssigen Dichtungsmittel, welches durch die Einfüllöffnung (14) in einen Dichtspalt (16) einfüllbar ist, welcher im Bereich der Anschlussöffnung (3) zwischen der Rohrleitung (1) und dem Sanierungsstutzen (2), sowie zwischen der inneren Abdichtung (7) und dem äußeren Abdichtungskragen (9) verläuft,
wobei der Sanierungsstutzen (2) längenveränderlich ausgestaltet ist und zwei axial aneinander anschließbare Abschnitte (4, 5) aufweist,
von denen ein so genannter innerer Abschnitt (4) die Abdichtung (7) aufweist
und ein so genannter äußerer Abschnitt (5) den Abdichtungskragen (9) aufweist,
**dadurch gekennzeichnet,**
**dass** die Abdichtung (7) einen Hohlraum (17) aufweist,
sowie einen Füllanschluss (18) zum Einleiten eines Füllmediums in den Hohlraum (17), derart, dass die Abdichtung (7) zur Vergrößerung ihres Außendurchmessers aktivierbar ist, und dass an den Hohlraum (17) der Abdichtung (7) ein Entlüftungsventil (19) anschließt.

2. Bausatz nach Anspruch 1,
**dadurch gekennzeichnet,**
**dass** der innere Abschnitt (4) ein zum Inneren der Rohrleitung (1) ausrichtbares Mündungsende aufweist, welches an die Krümmung der Wand der Rohrleitung (1) angepasst dreidimensional gewölbt verläuft.

3. Bausatz nach Anspruch 2,
**dadurch gekennzeichnet,**
**dass** auch die Abdichtung (7) an die Krümmung der Wand der Rohrleitung (1) angepasst dreidimensional gewölbt verläuft.

4. Bausatz nach einem der vorhergehenden Ansprüche,
**dadurch gekennzeichnet,**
**dass** die Abdichtung (7) als eine so genannte aktivierbare Abdichtung ausgestaltet ist, deren Außendurchmesser vergrößerbar ist.

5. Bausatz nach einem der vorhergehenden Ansprüche,
**dadurch gekennzeichnet,**
**dass** die Abdichtung (7) wenigstens eine umlaufende Dichtlippe (8) aufweist,
und **dass** der Querschnitt der Dichtlippe (8) widerhakenartig schräg verläuft,
derart, dass das Einschieben des mit der Abdichtung (7) versehenen inneren Abschnitts (4) des Sanierungsstutzens (2) in die Anschlussöffnung (3) der Rohrleitung (1) mit einem geringeren Kraftaufwand ermöglicht ist als das Herausziehen des inneren Abschnitts (4) aus der Anschlussöffnung (3).

6. Bausatz nach einem der vorhergehenden Ansprüche,
**dadurch gekennzeichnet,**
**dass** wenigstens einer der beiden Abschnitte (4, 5) des Sanierungsstutzens (2) baustellenseitig kürzbar ausgestaltet ist.

7. Bausatz nach einem der vorhergehenden Ansprüche,
**gekennzeichnet durch**
eine Schiebemuffe (6) zur Überbrückung der beiden stumpf aneinander stoßenden Abschnitte (4, 5) des Sanierungsstutzens (2).

8. Bausatz nach Anspruch 7,
**dadurch gekennzeichnet,**
**dass** die Schiebemuffe (6) mit einem der beiden Abschnitte (4, 5) verklebt ist.

9. Bausatz nach Anspruch 7,
**dadurch gekennzeichnet,**
**dass** eine Madenschraube sich durch die Schiebemuffe (6) und in den unverklebten Abschnitt (4) einschraubbar erstreckt.

10. Bausatz nach Anspruch 7,
**dadurch gekennzeichnet,**
**dass** die Schiebemuffe (6) in ihrem über den verklebten Abschnitt (5) hinausragenden Überstand einen Längsschlitz aufweist,
und **dass** eine Spannschelle um diesen Überstand verläuft, mittels welcher die Schiebemuffe (6) an dem unverklebten Abschnitt (4) festlegbar ist.

11. Bausatz nach einem der Ansprüche 1 bis 6,
**dadurch gekennzeichnet,**
**dass** die beiden Abschnitte (4, 5) des Sanierungsstutzens (2) teleskopartig ineinander geführt sind.

12. Bausatz nach einem der Ansprüche 1 bis 6,
**dadurch gekennzeichnet,**
**dass** die beiden Abschnitte (4, 5) des Sanierungsstutzens (2) zusammenwirkende Gewinde aufweisen.

13. Bausatz nach einem der vorhergehenden Ansprüche,
**gekennzeichnet durch**
Klebstoff zum Verkleben der beiden Abschnitte (4, 5) des Sanierungsstutzens (2).

14. Bausatz nach einem der vorhergehenden Ansprüche,
**dadurch gekennzeichnet,**
**dass** die Einfüllöffnung (14) mit einem Einfüllstutzen (15) versehen ist, der in Bezug auf die Längsachse des Sanierungsstutzens (2) radial nach außen verläuft.

15. Bausatz nach einem der vorhergehenden Ansprüche,
**gekennzeichnet durch**
eine an den Füllanschluss anschließbare Schaumpatrone.

16. Bausatz nach einem der vorhergehenden Ansprüche,
**dadurch gekennzeichnet,**
**dass** das Entlüftungsventil als Rückschlagventil ausgestaltet ist.

17. Bausatz nach einem der Ansprüche 1 bis 15,
**dadurch gekennzeichnet,**
**dass** das Entlüftungsventil als manuell absperrbares Ventil ausgestaltet ist.

18. Bausatz nach einem der Ansprüche 1 bis 15,
**dadurch gekennzeichnet,**
**dass** das Entlüftungsventil aus einem feinporigen, für Luft durchlässigen und das Füllmedium zurückhaltenden Material besteht.

## Claims

1. Kit for reconstructing a pipe connection,
▪ comprising a pipe socket referred to as the reconstruction socket (2) which is provided for insertion into a connection opening (3) of a pipe (1),
▪ a seal (7) that acts on the inside of the pipe (1) and is arranged on the reconstruction socket (2),
▪ a sealing collar (9) that acts on the outside of the pipe (1) and is arranged on the reconstruction socket (2) and encloses the reconstruction socket (2), which, firstly, lies tightly against the pipe (1) and, secondly, lies tightly against the reconstruction socket (2) and incorporates a filler opening (14) that is accessible from outside,
▪ and a liquid sealing agent which can be poured through the filler opening (14) into a sealing gap (16) which extends in the area of the connection opening (3) between the pipe (1) and the reconstruction socket (2) and between the inner seal (7) and the outer sealing collar (9),
where the reconstruction socket (2) is designed to be longitudinally adjustable and incorporates two sections (4, 5) that can be axially connected together and of which a so-called inner section (4) incorporates the seal (7) and a so-called outer section (5) incorporates the sealing collar (9),
**characterised in that** the seal (7) incorporates a hollow space (17) and a filler connection (18) for conducting a filling medium into the hollow space (17) in such a way that the seal (7) can be activated to increase its outside diameter and that an air-relief valve (19) is connected to the hollow space (17) in the seal (7).

2. Kit in accordance with claim 1, **characterised in that** the inner section (4) incorporates an outlet end that can be oriented towards the inside of the pipe (1) and is curved three-dimensionally and is adapted to match the curvature of the wall of the pipe (1).

3. Kit in accordance with claim 2, **characterised in that** also the seal (7) is adapted to match the curvature of the wall of the pipe (1) and is curved three-dimensionally.

4. Kit in accordance with any one of the foregoing claims, **characterised in that** the seal (7) is designed in the form of a so-called activatable seal the outside diameter of which can be increased.

5. Kit in accordance with any one of the foregoing claims, **characterised in that** the seal (7) incorporates at least one circumferential sealing lip (8) and **in that** the cross-section of the sealing lip (8) is set at an angle in the manner of a barb in such a way that the inner section (4) of the reconstruction socket (2) that is provided with the seal (7) can be inserted into the connection opening (3) of the pipe (1) with less effort than is needed to pull the inner section (4) out of the connection opening (3).

6. Kit in accordance with any one of the foregoing claims, **characterised in that** at least one of the two sections (4, 5) of the reconstruction socket (2) is designed so that it can be shortened at the installation site.

7. Kit in accordance with any one of the foregoing claims, **characterised by** a sliding sleeve (6) to bridge the two sections (4, 5) of the reconstruction socket (2) that abut each other.

8. Kit in accordance with claim 7, **characterised in that** the sliding sleeve (6) is bonded to one of the two sections (4, 5).

9. Kit in accordance with claim 7, **characterised in that** a grub screw extends through the sliding sleeve (6) and can be screwed into the non-bonded section (4).

10. Kit in accordance with claim 7, **characterised in that** the sliding sleeve (6) incorporates in its portion that projects beyond the bonded section (5) a longitudinal slot and that a locking clip by means of which the sliding sleeve (6) can be fastened on the non-bonded section (4) extends around this projecting portion.

11. Kit in accordance with any one of claims 1 to 6, **characterised in that** the two sections (4, 5) of the reconstruction socket (2) slide one into the other telescopewise.

12. Kit in accordance with any one of claims 1 to 6, **characterised in that** the two sections (4, 5) of the reconstruction socket (2) incorporate co-acting screw threads.

13. Kit in accordance with any one of the foregoing claims, **characterised by** adhesive for bonding the two sections (4, 5) of the reconstruction socket (2).

14. Kit in accordance with any one of the foregoing claims, **characterised in that** the filler opening (14) is provided with a filler socket (15) that extends radially outwards relative to the longitudinal axis of the reconstruction socket (2).

15. Kit in accordance with any one of the foregoing claims, **characterised by** a foam cartridge that can be connected to the filler connection.

16. Kit in accordance with any of the preceding claims, **characterised in that** the air-relief valve is designed as a non-return valve.

17. Kit in accordance with any one of claims 1 to 15, **characterised in that** the air-relief valve is configured as a manually closable valve.

18. Kit in accordance with any one of claims 1 to 15, **characterised in that** the air-relief valve is made from a finely-pored material that is air-permeable and retains the filling-medium.

## Revendications

1. Kit d'assainissement d'un raccord de conduite,
▪ comprenant un embout de conduite appelé embout d'assainissement (2), qui est prévu pour être introduit dans l'orifice (3) de raccord d'une conduite (1),
▪ une étanchéité (7) opérant en direction du côté intérieur de la conduite (1) et disposée contre l'embout d'assainissement (2),
▪ un col d'étanchéité (9) opérant en direction du côté extérieur de la conduite (1) et disposé contre l'embout d'assainissement (2), col qui entoure l'embout d'assainissement (2), qui premièrement applique de manière étanche contre la conduite (1), qui deuxièmement applique de manière étanche contre l'embout d'assainissement (2) et qui présente un orifice de remplissage (14) accessible de l'extérieur,
▪ et comprenant un produit d'étanchéité liquide qu'il est possible de verser dans un interstice (16) d'étanchéité par l'orifice de remplissage (14), interstice dont le tracé est compris, dans la zone de l'orifice de raccordement (3), entre la conduite (1) et l'embout d'assainissement (2) ainsi qu'entre l'étanchéité intérieure (7) et le col d'étanchéité (9) extérieur,
sachant que l'embout d'assainissement (2) est configuré de longueur variable et présente deux segments (4, 5) juxtaposables axialement l'un à l'autre, parmi lesquels un segment (4) dit intérieur présente l'étanchéité (7) et un segment (5) dit extérieur présente le col d'étanchéité (9),
**caractérisé en ce que** l'étanchéité (7) présente une cavité (17) ainsi qu'un raccord de remplissage (18) servant à introduire un fluide de remplissage dans la cavité (17), de sorte que l'étanchéité (7) est activable pour accroître son diamètre extérieur, et **en ce qu'**à la cavité (17) de l'étanchéité (7) est raccordée une valve de dégazage (19).

2. Kit selon la revendication 1, **caractérisé en ce que** le segment intérieur (4) présente une extrémité de débouché orientable vers l'intérieur de la conduite (1), extrémité qui présente un tracé incurvé tridimensionnel adapté à la courbure de la paroi de la conduite (1).

3. Kit selon la revendication 2, **caractérisé en ce que** l'étanchéité (7) elle aussi présente un tracé incurvé tridimensionnel adapté à la courbure de la paroi de la conduite (1).

4. Kit selon l'une des revendications précédentes, **caractérisé en ce que** l'étanchéité (7) est configurée en étanchéité dite activable dont le diamètre extérieur peut être agrandi.

5. Kit selon l'une des revendications précédentes, **caractérisé en ce que** l'étanchéité (7) présente au moins une lèvre d'étanchéité (8) périphérique et **en ce que** la section de la lèvre d'étanchéité (8) présente un tracé en biais à la manière d'un barbillon, de sorte que l'insertion du segment intérieur (4) - muni de l'étanchéité (7) - de l'embout d'assainissement (2) dans l'orifice (3) de raccordement de la conduite (1) est rendue possible au prix d'une force inférieure à celle requise pour extraire le segment intérieur (4) hors de l'orifice (3) de raccordement.

6. Kit selon l'une des revendications précédentes, **caractérisé en ce qu'**au moins l'un des deux segments (4, 5) de l'embout d'assainissement (2) est configuré raccourcissable sur le chantier.

7. Kit selon l'une des revendications précédentes, **caractérisé par** un manchon coulissant (6) servant à ponter les deux segments (4, 5), aboutant bord à bord, de l'embout d'assainissement (2).

8. Kit selon la revendication 7, **caractérisé en ce que** le manchon coulissant (6) est collé contre l'un des deux segments (4, 5).

9. Kit selon la revendication 7, **caractérisé en ce qu'**une vis sans tête traverse le manchon coulissant (6) et qu'il est possible de la visser dans le segment (4) non collé.

10. Kit selon la revendication 7, **caractérisé en ce que** le manchon coulissant (6) présente une fente longitudinale dans sa partie dépassant le segment (5) collé, et **en ce qu'**un collier de serrage ceinture cette partie dépassante, collier au moyen duquel le manchon coulissant (6) est immobilisable contre le segment (4) non collé.

11. Kit selon l'une des revendications 1 à 6, **caractérisé en ce que** les deux segments (4, 5) de l'embout d'assainissement (2) sont guidés de manière télescopique l'un dans l'autre.

12. Kit selon l'une des revendications 1 à 6, **caractérisé en ce que** les deux segments (4, 5) de l'embout d'assainissement (2) présentent des filetages en interaction.

13. Kit selon l'une des revendications précédentes, **caractérisé par** de la colle servant à coller les deux segments (4, 5) de l'embout d'assainissement (2).

14. Kit selon l'une des revendications précédentes, **caractérisé en ce que** l'orifice de remplissage (14) est muni d'un embout de remplissage (15) présentant un tracé radial vers l'extérieur par rapport à l'axe longitudinal de l'embout d'assainissement (2).

15. Kit selon l'une des revendications précédentes, **caractérisé par** une cartouche de mousse raccordable au raccord de remplissage.

16. Kit selon l'une des revendications précédentes, **caractérisé en ce que** la valve de dégazage est configurée en vanne à clapet antiretour.

17. Kit selon l'une des revendications 1 à 15, **caractérisé en ce que** la valve de dégazage est configurée en valve obturable manuellement.

18. Kit selon l'une des revendications 1 à 15, **caractérisé en ce que** la valve de dégazage se compose d'un matériau à pores fins perméable à l'air et retenant le fluide de remplissage.
